# EUROPEAN PATENT APPLICATION

(11) **EP 4 001 607 A1**
(43) Date of publication of application: **25.05.2022**
(21) Application number: 20207948.9
(22) Date of filing: 17.11.2020
(51) Int. Cl.: F02B 25/02, F02M 21/02, F02B 23/10, F02M 26/32, F02M 26/28

(54) **INTERNAL COMBUSTION ENGINE, EXHAUST SYSTEM AND METHOD FOR RUNNING AN INTERNAL COMBUSTION ENGINE**

(71) Applicant: Winterthur Gas & Diesel Ltd., 8401 Winterthur (CH)
(72) Inventor: Spicher, André, Huangpu District Shanghai, P.R. China (CN); Schneiter, Dominik, 8308 Illnau (CH)
(74) Representative: Hepp Wenger Ryffel AG

(57) **Abstract**

The invention is related to an internal combustion engine (100), an exhaust system (101) and methods for running an internal combustion engine (100).

The Internal combustion engine (100) has at least one cylinder (1) is preferably a large vessel engine with at least one cylinder (1) having an inner diameter of at least 200mm, preferably a low pressure fuel gas engine or dual-fuel engine with a cylinder (1) having at least one gas admission valve (24) for injecting low pressure fuel gas directly into the cylinder (1) through a cylinder wall (2). The internal combustion engine (100) comprises an intake system (3) through which scavenging gas is introduced into the cylinder (1) and an exhaust system (101) through which exhaust gas generated in the cylinder (1) is discharged. The exhaust system (101) includes an exhaust gas receiver (4) connected to the cylinder (1) via an exhaust outlet (25) for discharging exhaust gas form the cylinder and an exhaust treatment unit (5), comprising at least one exhaust gas cooler (6), preferably three exhaust gas coolers (6), and comprising a duct system (7) for guiding a cooling medium, such as water. The exhaust system (101) comprises at least one heat exchanger (11a, 11b) comprising a first fluid line (12a, 12b) fluidly connected or connectable to the duct system (7) and configured to receive cooling medium from the at least one exhaust gas cooler (6).

## Description

The present invention is related to an internal combustion engine, an exhaust system and method for running an internal combustion engine.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), biological fuels (e. g. oil made from algae or seaweed), ammonia, hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing rules such as IMO Tier III.

To reduce the reactivity of gas/air mixture and methane slip, it is known to provide low pressure exhaust gas recirculation, as shown for example in EP 3 722 572 A1. For the stability of the combustion it is favourable to cool the recirculated exhaust gas.

US 10,054,085 B2 shows a power system comprising an EGR cooler being a single stage heat exchanger or a dual stage heat exchanger. The heat used to vaporize fuel for the power system may be provided by the heat exchanger. The exhaust has to be guided through the heat exchangers.

Usually, low pressure EGR solutions come with additional space requirements in the engine room. Furthermore, low pressure EGR solutions result in low exhaust enthalpy after engine, which results in a low steam. A reduced quantity of steam may cause a problem for standard exhaust gas economizers.

It is an object of the present invention to avoid the drawbacks of the prior art and in particular to provide an internal combustion engine, an exhaust treatment unit and a method of operating an internal combustion engine requiring a reduced space and at the same time providing a stable combustion without compromising enthalpy.

The object is achieved by the internal combustion engine and the method of operating an internal combustion engine according to the independent claims.

The internal combustion engine has at least one cylinder. In particular the internal combustion engine is a large vessel engine with at least one cylinder having an inner diameter of at least 200mm, preferably a low pressure fuel gas engine or dual-fuel engine.

The at least one cylinder has at least one gas admission valve for injecting low pressure fuel gas directly into the cylinder through a cylinder wall.

The at least one cylinder has at least one an exhaust outlet. A discharge valve may be arranged in the exhaust outlet.

The internal combustion engine further comprises an intake system from which scavenging gas is introduced into the cylinder.

The intake system may comprise a pipe being fluidly connected to an air inlet of the cylinder.

The intake system may comprise a scavenge air receiver. Before entering the scavenge air receiver, the gas may be guided through a scavenge air cooler. The scavenge air may enter the cylinder via scavenge air ports in the cylinder wall.

The internal combustion engine further comprises an exhaust system through which exhaust gas generated in the cylinder is discharged. The exhaust system includes an exhaust gas receiver connected to the cylinder via the exhaust outlet for discharging exhaust gas from the cylinder.

The exhaust outlet of the cylinder may be connected to an exhaust conduit which leads to the exhaust gas receiver, where for example the exhaust gas of more than one cylinder is collected.

The exhaust gas receiver preferably has an elongated hollow cylindrical body, for example constructed of sheet metal. The sheet metal may be covered by a layer of insulating material to avoid heat loss.

The exhaust gas receiver extends along the, preferably entire, length of the engine [in a direction perpendicular to the axis of the cylinder] and preferably receives exhaust gases from all of the cylinders via independent exhaust conduits that extend into the exhaust gas receivers.

The exhaust system includes further includes an exhaust treatment unit, comprising at least one exhaust gas cooler, preferably three exhaust gas coolers.

A plurality of exhaust gas coolers is more effective than a single exhaust gas cooler, as condensed water may drain between the exhaust gas coolers due to gravity.

The exhaust gas cooler may be of tube and fin type. Exhaust gas may contact the fins and heat from the exhaust gas can be transferred to a cooling medium which may be guided in the tubes.

The cooler may comprise a large cross-section, preferably of totally 500-5000 m², depending on the engine size, such that a pressure drop can be kept at a minimum.

The exhaust treatment unit comprises a duct system for guiding a cooling medium, such as water. The duct system may comprise tubes of the exhaust gas cooler.

Heat from the exhaust gas may be submitted to the exhaust gas cooler and may be transferred out of the cooler by the cooling medium guided in the duct system.

The exhaust system comprises at least one heat exchanger with a first fluid line fluidly connected or connectable to the duct system. The at least one heat exchanger is configured to receive the cooling medium from the at least one exhaust gas cooler.

Heat transferred from the exhaust gas cooler by cooling medium may be released in heat exchanger.

The internal combustion engine may further comprise a turbocharger having a turbine that drives a compressor arranged upstream the intake system.

The turbine preferably is arranged upstream the exhaust treatment unit. Exhaust gas may be guided from the exhaust gas receiver directly to the turbine without being treated in the exhaust treatment unit.

Hence, preferably the exhaust gas receiver and the exhaust treatment unit are separated from each other in terms of pressure and temperature.

The internal combustion engine may comprise a cooling medium circuit, the cooling medium circuit comprising the duct system and the first fluid line.

The cooling medium may be guided through a closed circuit.

The cooling medium circuit preferably comprises a pump. The pump may be arranged upstream of the heat exchanger and downstream of the exhaust cooler. The pump may draw the cooling medium out of the duct system and may push it into the first fluid line of the heat exchanger.

In a beneficial embodiment at least one of the at least one heat exchanger is a gas mode heat exchanger. The gas mode heat exchanger comprises a tempering fluid line, configured for guiding a tempering fluid, in particular Glycol, for heating fuel gas.

The tempering fluid my take up heat transferred into the gas mode heat exchanger by the cooling medium.

The gas mode heat exchanger or the tempering fluid line may be part of a LNG vaporization circuit of a fuel gas supply system. The tempering fluid, for example Glycol, may substitute or may support steam provided by an economizer when fuel gas is heated up.

At least one of the at least one heat exchanger may be a diesel mode heat exchanger. The diesel mode heat exchanger may comprise a water fluid line, configured for receiving water of the engine central cooling circuit.

Preferably the internal combustion engine comprises a gas mode heat exchanger and a diesel mode heat exchanger. As long as the engine is driven by gas, the gas mode heat exchanger may be used. When the engine is driven by Diesel, the diesel mode heat exchanger may be used.

In an advantageous embodiment the internal combustion machine comprises an exhaust gas recirculation duct fluidly connecting the exhaust treatment unit and the intake system, preferably arranged on the low pressure side of the turbocharger.

Exhaust gas may be branched off an exhaust line downstream of the turbine of the turbocharger, such that a portion of the exhaust gas may be guided to the exhaust treatment unit and from there to the intake system via the compressor of the turbocharger.

The exhaust gas recirculation duct may be part of an EGR system extending between the exhaust gas receiver and the intake system which comprises the exhaust treatment unit. The EGR system has an EGR conduit that directs a portion of the exhaust gas from the turbine to the exhaust treatment unit and from there to the intake system via the exhaust gas recirculation duct.

The internal combustion machine may comprise a blower in the EGR system, in particular in the exhaust gas recirculation duct.

Alternatively or additionally the internal combustion machine may comprise an exhaust gas flow restriction device for setting the exhaust pressure in the exhaust gas recirculation duct.

Preferably said exhaust gas flow restriction device is an exhaust gas back pressure valve, in particular comprising a controllable opening, to provide an adaptable back pressure for controlling the exhaust gas recirculation rate. Preferably, the exhaust pressure in the exhaust gas recirculation duct may be set in a range between 5 to 100mbar.

The exhaust gas flow restriction device may be arranged in or close to the branching point where a first portion of the exhaust gas is branched off from an exhaust line downstream of the turbine of the turbocharger and a second portion is guided to an economizer and/or to a funnel.

The exhaust treatment unit may comprises a water separator, preferably arranged downstream the exhaust gas cooler. The water separator collects condensed water which for example drains between the exhaust gas coolers, which may have a certain distance, preferably 1-3m, from each other.

The collected water may be cleaned in a water treatment system before discharge.

The water separator is designed to cause only a small pressure drop, preferably smaller than 50 mmWG (corresponding to 0.098 mbar). Flow deflection plates may cause water droplet separation by inertia.

The exhaust treatment unit may comprise at least one exhaust cleaning element, for example a scrubber, preferably arranged upstream the exhaust gas cooler.

In a beneficial embodiment the exhaust treatment unit and the exhaust receiver are arranged adjacently, preferably comprise a common frame and/or a common housing.

The exhaust gas receiver unit and the exhaust receiver may both have an elongated hollow body, which extend in the same direction, and/or which may share one common wall.

Thus the exhaust system is a compact element and space saving element which may be mounted directly on the cylinders.

The exhaust treatment unit may comprise a control unit.

The control unit may comprise at least one output-line for regulating the flow of cooling water through the at least one heat exchanger, which is connected or connectable to a valve for opening or closing the first fluid line. Hence the control unit may allow or prevent heat exchange in the at least one heat exchanger.

Preferably, the exhaust treatment unit comprises valves for each of the heat exchangers and the control unit comprises output-line for controlling each of the valves.

Hence, the exhaust treatment unit may for example be switched from a gas mode to a diesel mode by closing the valve allowing a flow of cooling medium through the first fluid line of the gas mode heat exchanger and by opening the valve allowing a flow of cooling medium through the first fluid line of the diesel mode heat exchanger.

The control unit may further comprise an output line for setting the back pressure in the exhaust gas recirculation duct, which is connected or connectable to an exhaust gas flow restriction device. The control unit may control the EGR rate by setting the opening of an exhaust gas back pressure valve.

The object is also achieved by an exhaust system for an internal combustion engine, preferably as described above. The exhaust system comprises an exhaust treatment unit with at least one exhaust gas cooler and an exhaust receiver. The exhaust treatment unit and the exhaust receiver are arranged adjacently, preferably comprise a common frame and/or a common housing.

The exhaust treatment unit may comprise a duct system for guiding a cooling medium which may be connectable to at least one heat exchanger.

The exhaust system may form a space saving unit which be may mounted as one part directly to a plurality of cylinders.

The object is also achieved by a method for operating an internal combustion engine having at least one cylinder. Preferably, the internal combustion engine is a large vessel engine with at least one cylinder having an inner diameter of at least 200mm, preferably a low pressure fuel gas engine or dual-fuel engine with a cylinder having at least one gas admission valve for injecting low pressure fuel gas directly into the cylinder through a cylinder wall and an exhaust outlet for discharging exhaust gas, preferably an internal combustion engine as described above.

The method comprises the following steps.

Exhaust gas is cooled in at least one exhaust gas cooler, which is operated with a cooling medium, such as water.

The cooling medium is guided through at least one heat exchanger, wherein the heat of the cooling medium is transferred to a tempering fluid, in particular Glycol, for heating fuel gas or to water of the engine central cooling circuit.

The exhaust gas may be recirculated into the cylinder.

In particular the exhaust gas may be guided from an exhaust gas receiver to a turbine of a turbocharger and from the exhaust gas cooler to the compressor of the turbocharger. More preferably, the exhaust gas is guided from the turbine of a turbocharger to the exhaust gas cooler.

In the following, the invention is further explained in embodiments by means of figures:
- Figure 1:: shows an internal combustion engine in a side view;
- Figure 2:: shows a schematic drawing of a cylinder;
- Figure 3:: shows a schematic drawing of an internal combustion engine according to the invention;

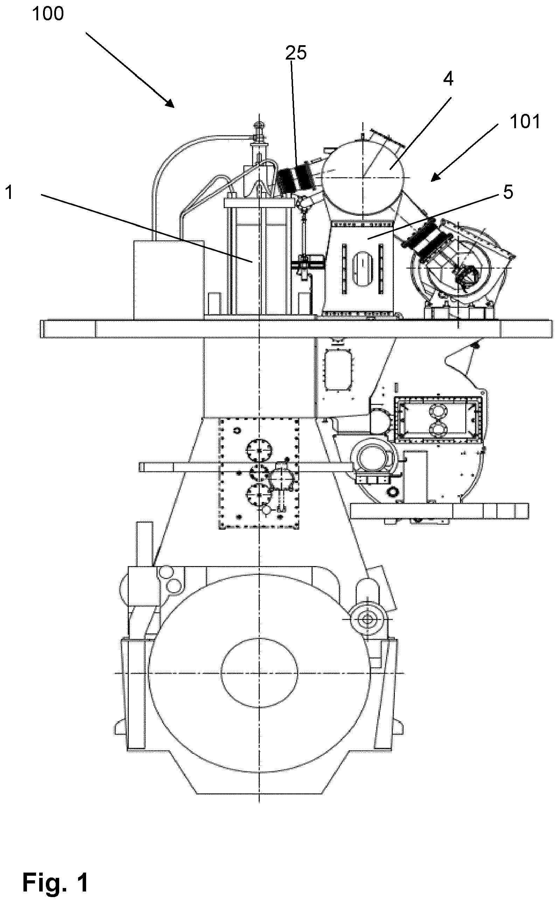

Figure 1 shows an internal combustion engine 100 in a side view. The internal combustion engine 100 is a large vessel dual-fuel engine with four cylinders 1 having an inner diameter of at least 200mm.

The internal combustion engine 100 comprises an exhaust system 101 through which exhaust gas generated in the cylinders 1 is discharged.

The exhaust system 101 includes an exhaust gas receiver 4 connected to the cylinder 1 via an exhaust outlet 25 for discharging exhaust gas from the cylinder 1 and an exhaust treatment unit 5.

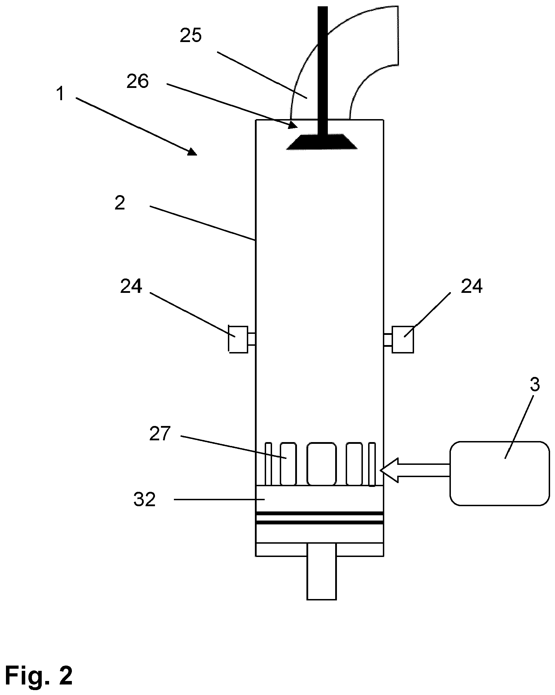

Figure 2 shows a schematic drawing of a cylinder 1. The cylinder 1 has two gas admission valves 24 for injecting low pressure fuel gas directly into the cylinder 1 through a cylinder wall 2.

Scavenge air may enter the cylinder 1 from an intake system 3 via scavenge air ports 27 in the cylinder wall 2. Exhaust gas may be discharged from the cylinder 1 through an exhaust outlet 25. A discharge valve 26 is arranged in the exhaust outlet 25.

A piston 32 is reciprocably mounted in the cylinder 1.

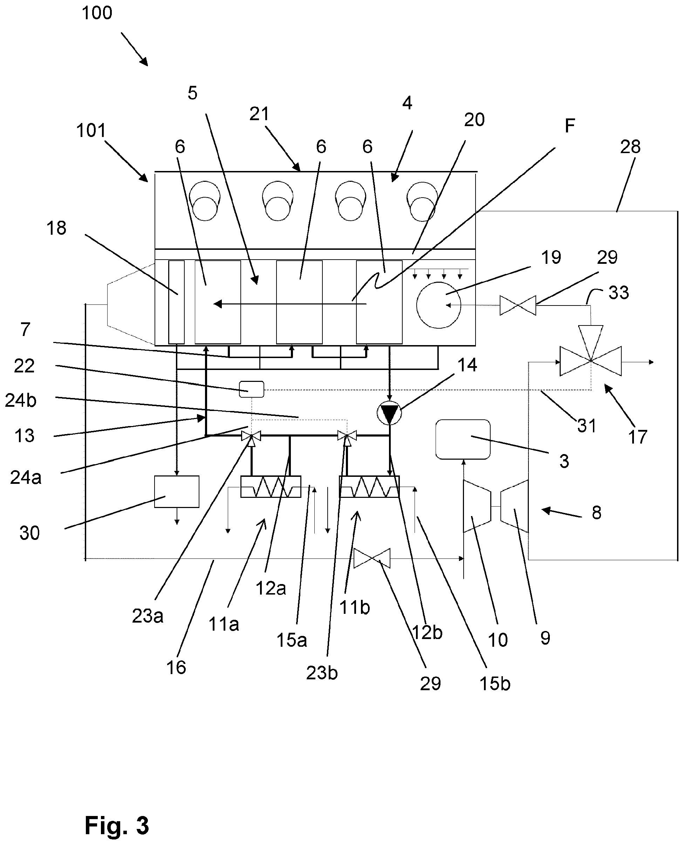

Figure 3 shows a schematic drawing of the internal combustion engine 100.

The internal combustion engine 100 comprises an exhaust system 101 through which exhaust gas generated in the cylinders 1 (see figures 1 and 2) is guided. The exhaust gas receiver 4 is connected to the cylinders 1 via the exhaust outlets 25 (see figures 1 and 2).

The exhaust treatment unit 5 is arranged adjacently with respect to the exhaust gas receiver 4 on a common frame 20 and in a common housing 21.

The exhaust treatment unit 5 comprises three exhaust gas coolers 6 arranged in series. The exhaust treatment unit 5 also comprises an exhaust cleaning element 19 arranged upstream from the exhaust gas coolers 6 with respect to the flow direction F of the exhaust gas in the exhaust treatment unit 5.

The exhaust treatment unit 5 further comprises a water separator 18 downstream of the coolers 6. The water separated in the water separator 18 may be cleaned in a water treatment device 30.

Exhaust gas is guided through an exhaust line 28 from the exhaust gas receiver 4 to a turbine 9 of a turbocharger 8 which drives a compressor 10 of the turbocharger 8.

A part of the exhaust gas is branched off and guided through the exhaust treatment unit 5 to be recirculated in to the cylinder 1. In the exhaust treatment unit 5 the exhaust gas is cleaned in the exhaust cleaning element 19, for example by a water spray arrangement. The exhaust gas is then cooled in the exhaust gas coolers 6 and guided through an exhaust gas recirculation duct 16 to the compressor 10 of the turbocharger 8 and to the intake system 3. Upstream of the compressor 10 the exhaust gas is mixed with fresh air.

The pressure in the exhaust gas recirculation duct 16 may be set by an exhaust gas back pressure valve 17. Exhaust gas recirculation may be prevented by closing valves 29 arranged upstream and downstream the exhaust treatment unit 5 in the EGR path 33.

The exhaust system 101 comprises a duct system 7 for guiding cooling water through a cooling circuit 13. The duct system 7 comprises tubes (not explicitly shown) arranged in the coolers 6.

The duct system is connected to a first fluid line 12a of a gas mode heat exchanger 11a and to a first fluid line 12b of a diesel mode heat exchanger 11b, such that the cooling water may be guided through the gas mode heat exchanger 11a and/or the diesel mode heat exchanger 11b.

The gas mode heat exchanger 11a comprises a tempering fluid line 15a, configured for guiding Glycol. The Glycol is used for heating fuel gas.

The diesel mode heat exchanger 11b comprises a water fluid line 15b, configured for guiding water of the engine central cooling circuit.

A valve 23a may allow or prevent a stream of cooling medium from the exhaust treatment unit 5 through the first fluid line 12a of the gas mode heat exchanger 11a.

A valve 23b may allow or prevent a stream of cooling medium from the exhaust treatment unit 5 through the first fluid line 12b of the diesel mode heat exchanger 11b.

The cooling circuit 13 comprises a pump 14, which determines the direction of flow of the cooling medium. In the exhaust treatment unit 5 the cooling medium flows in a direction opposite to the flow direction F of the exhaust gas. The pump 14 is arranged downstream of the exhaust treatment unit 5 and upstream of the heat exchangers 11a, 11b.

The exhaust treatment unit 5 comprises a control unit 22. The control unit 22 comprises an output-line 24a for regulating the flow of cooling water through the gas mode heat exchanger 11a. The output-line 24a is connected to the valve 23a for opening or closing the first fluid line 12a of the gas mode heat exchanger 11a.

The control unit 22 further comprises an output-line 24b for regulating the flow of cooling water through the diesel mode heat exchanger 11b. The output-line 24b is connected to the valve 23b for opening or closing the first fluid line 12b of the diesel mode heat exchanger 11b.

The control unit 22 is adapted to switch between a gas mode and a diesel mode, wherein cooling medium is either guided to the gas mode heat exchanger 11a for heating up gas or is guided to the diesel mode heat exchanger 11b wherein the cooling water is cooled by water of the engine central cooling circuit.

The control unit may have a further output-line 31 for setting the back pressure valve 17. By opening or closing the back pressure valve 17 more or less exhaust gas is recirculated into the cylinder 1.

The temperature of Glycol when entering the gas mode heat exchanger 11a may be approximately 20°C. Glycol may be heated up to 30-35°C in the gas mode heat exchanger 11a.

The temperature of water of the engine central cooling circuit when entering the diesel mode heat exchanger 11b may be approximately 36°C. The water of the engine central cooling circuit may be heated by circa 5°C or more in the diesel mode heat exchanger 11b.

The cooling water may have a temperature of 38-40°C when entering the the exhaust treatment unit.
The exhaust gas is cooled from a temperature of 200°C -280°C to a temperature of 40°C -50°C.

Exhaust gas recirculation provides for a lower risk of methane slip. When the internal combustion engine is operated in a gas mode, that is, when fuel gas directly injected into the cylinder 1, circa 50% of the exhaust gas is recirculated.

For stability of the combustion the exhaust gas has to be cooled. The admission of hot gas in to the cylinder may cause a risk of pre-ignition, erratic ignitions and unwanted pressure fluctuations.

## Claims

1. Internal combustion engine (100) having at least one cylinder (1), preferably a large vessel engine with at least one cylinder (1) having an inner diameter of at least 200mm, preferably a low pressure fuel gas engine or dual-fuel engine with
a cylinder (1) having at least one gas admission valve (24) for injecting low pressure fuel gas directly into the cylinder (1) through a cylinder wall (2),
the internal combustion engine (100) further comprising an intake system (3) from which scavenging gas is introduced into the cylinder (1),
an exhaust system (101) through which exhaust gas generated in the cylinder (1) is discharged,
the exhaust system (101) including
an exhaust gas receiver (4) connected to the cylinder (1) via an exhaust outlet (25) for discharging exhaust gas from the cylinder (1) and
an exhaust treatment unit (5), comprising at least one exhaust gas cooler (6), preferably three exhaust gas coolers (6), and comprising a duct system (7) for guiding a cooling medium, such as water,
**characterised in that**
the exhaust system (101) comprises at least one heat exchanger (11a, 11b) comprising a first fluid line (12a, 12b) fluidly connected or connectable to the duct system (7) and configured to receive the cooling medium from the at least one exhaust gas cooler (6).

2. Internal combustion engine (100) according to claim 1,
wherein the internal combustion engine (100) further comprises a turbocharger (8) having a turbine (9), preferably arranged upstream the exhaust treatment unit (4), that drives a compressor (10) arranged upstream the intake system (3).

3. Internal combustion engine (100) according to claim 1 or 2, wherein the internal combustion engine (100) comprises a cooling medium circuit (13), comprising the duct system (7) and the first fluid line (12a, 12b),
preferably comprising a pump (14), in particular arranged upstream of the heat exchanger (11a, 11b) and downstream of the exhaust cooler (6).

4. Internal combustion engine (100) according to claim 1, 2 or 3, wherein at least one of the at least one heat exchanger (11a, 11b) is a gas mode heat exchanger (11a), the gas mode heat exchanger (11a) comprising a tempering fluid line (15a), configured for guiding a tempering fluid, in particular Glycol, for heating fuel gas.

5. Internal combustion engine (100) according to any of the preceding claims, wherein at least one of the at least one heat exchanger (11a, 11b) is a diesel mode heat exchanger (11b), the diesel mode heat exchanger (11b) comprising a water fluid line (15b), configured for guiding water of the engine central cooling circuit.

6. Internal combustion engine (100) according to any of the preceding claims, wherein the internal combustion machine (100) comprises an exhaust gas recirculation duct (16) fluidly connecting exhaust treatment unit (5) and intake system (3), preferably arranged on the low pressure side of the turbocharger (8).

7. Internal combustion engine (100) according to claim 6,
wherein the internal combustion machine comprises a exhaust gas flow restriction device (17) for setting the exhaust pressure in the exhaust gas recirculation duct (16), preferably said exhaust gas flow restriction device (17) being an exhaust gas back pressure valve, in particular comprising a controllable opening, to provide an adaptable back pressure for controlling the exhaust gas recirculation rate, preferably in a range between 5 to 100mbar.

8. Internal combustion engine (100) according to any of the preceding claims, wherein the exhaust treatment unit (5) comprises a water separator (18), preferably arranged downstream the exhaust gas cooler (6).

9. Internal combustion engine (100) according to any of the preceding claims, wherein the exhaust treatment unit (5) comprises at least one exhaust cleaning element (19), for example a scrubber, preferably arranged upstream the exhaust gas cooler (6).

10. Internal combustion engine (100) according to any of the preceding claims, wherein
the exhaust treatment unit (5) and the exhaust receiver (4) are arranged adjacently, preferably comprise a common frame (20) and/or a common housing (21).

11. Internal combustion engine (100) according to any of the preceding claims, wherein
the exhaust treatment unit (5) comprises a control unit (22), the control unit (22) comprising at least one output-line (24a, 24b) for regulating the flow of cooling water through the at least heat exchanger (11a, 11b), connected or connectable to a valve (23a, 23b) for opening or closing the first fluid line (12a, 12b).

12. An exhaust system (101) for an internal combustion engine (100), preferably according to any of the preceding claims, wherein the exhaust system (101) comprises an exhaust treatment unit (5) with at least one exhaust gas cooler (6) and an exhaust receiver (4), and wherein the exhaust treatment unit (5) and the exhaust receiver (4) are arranged adjacently, preferably comprise a common frame (20) and/or a common housing (21).

13. Method for operating an internal combustion engine (100) having at least one cylinder (1), preferably a large vessel engine with at least one cylinder (1) having an inner diameter of at least 200mm, preferably a low pressure fuel gas engine or dual-fuel engine with a cylinder having at least one gas admission valve (24) for injecting low pressure fuel gas directly into the cylinder (1) through a cylinder wall (2), preferably an internal combustion engine according to one of claims 1-11,
Comprising the following steps:
- Cooling exhaust gas in at least one exhaust gas cooler (6) being operated with a cooling medium , such as water,
- guiding the cooling medium through at least one heat exchanger (11a, 11b), wherein the heat of the cooling medium is transferred to a tempering fluid, in particular Glycol, for heating fuel gas or to water of the engine central cooling circuit.

14. Method according to claim 13, wherein exhaust gas is recirculated into the cylinder (1), in particular guided from an exhaust gas receiver (4) to a turbine (9) of a turbocharger (8) and from the exhaust gas cooler (6) to the compressor (10) of the turbocharger (8).
